# EUROPEAN PATENT APPLICATION

(11) **EP 2 230 405 A1**
(43) Date of publication of application: **22.09.2010**
(21) Application number: 08852023.4
(22) Date of filing: 14.11.2008
(51) Int. Cl.: F04B 39/00, F04C 29/00, H02K 5/22, H02K 7/14

(54) **TERMINAL DEVICE FOR ELECTRIC COMPRESSOR**

(30) Priority: 19.11.2007 JP 2007298970
(71) Applicant: Sanden Corporation, Isesaki-shi, Gunma 372-8502 (JP)
(72) Inventor: TAGUCHI, Masanori, Isesaki-shi Gunma 372-8502 (JP); OSAKA, Masahiko, Isesaki-shi Gunma 372-8502 (JP); KOYAMA, Shigeyuki, Isesaki-shi Gunma 372-8502 (JP); KOBAYASHI, Eiji, Isesaki-shi Gunma 372-8502 (JP)
(74) Representative: Grünecker, Kinkeldey, Stockmair & Schwanhäusser Anwaltssozietät
(86) International application number: PCT/JP2008/070779
(87) International publication number: WO 2009/066619

(57) **Abstract**

A terminal device for an electric compressor has a partition wall and a terminal member for supplying electricity to an electric motor for driving a compression mechanism. The partition wall is located between an electric motor-storing section, which stores the electric motor and in which lubricating oil-containing fluid to be compressed is present, and a circuit section for supplying electricity to the electric motor. The terminal member extends through the partition wall in a sealed and insulated manner. The terminal member is constructed as a steel bolt-like member, and an end of a lead wire for supplying electricity to the electric motor is directly connected by caulking to the end of the terminal member at the electric motor-storing section side. The terminal device can exhibit high insulation performance even if polyalkylene glycol-based oil is used as lubricating oil contained in fluid to be compressed. Further, the terminal device has a simple structure not requiring a cluster, can ensure high insulation performance, and can be constructed at low cost.

## Description

### Technical Field of the Invention

The present invention relates to a terminal device for an electric compressor, and specifically, to a terminal device for an electric compressor which can change a kind of lubricating oil contained in fluid to be compressed (for example, refrigerant) to a cheap one, and even when the lubricating oil is changed, can ensure good insulation performance while the structure is simplified, and can ensure a desired electricity conduction property.

### Background Art of the Invention

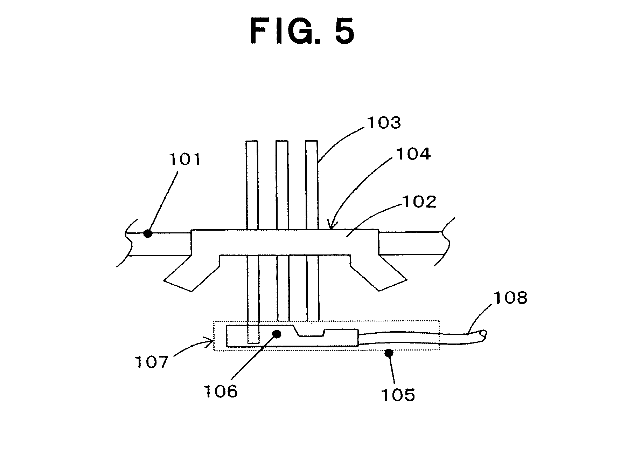

A structure has been known wherein electricity supply to an electric motor built in an electric compressor is carried out using a sealed terminal device (also called as a hermetic terminal) (for example, Patent document 1). In such a conventional terminal device for an electric compressor, for example, as depicted in Fig. 5, sealed and insulated terminal device 104, in which a plurality of terminals 103 are held by terminal plate 102 so as to extend through the plate 102 at a sealed and insulated condition (for example, a sealed and insulated condition via glass), is attached at a predetermined position of compressor housing 101, to the inner end of each sealed terminal 103 of this sealed and insulated terminal device 104, each input female terminal 106 of cluster 107, in which a plurality of input female terminals 106 are held in resin housing 105, is electrically connected by fitting, etc., and electricity is supplied to a coil wire for a stator of the built-in electric motor through wire for electricity supply 108 connected to the input female terminal 106. In order to ensure the electricity conduction property, copper terminals, etc. high in conductivity are used for the input female terminal 106 and the connection portion of the sealed terminal 103.

Further, generally lubricating oil is contained in a fluid to be compressed by a compressor (for example, refrigerant R134a) for lubrication of respective parts of the compressor, etc., and in an electric compressor built in with an electric motor, because the lubricating oil-containing fluid to be compressed exists in (passes through) the electric motor storing section for cooling the built-in electric motor, etc. and it comes into contact with the electric motor storing section side of the terminal device, a high insulation property is required for this portion. In particular, in the above-described structure in which cluster 107 is connected to the inner end of sealed terminal 103, because of presence of the connection structure for the electricity conductive portions by fitting, caulking, etc., many gap portions are formed, therein the lubricating oil-containing fluid to be compressed flows and the insulation property is liable to be reduced, and therefore, in order to prevent leak and the like through the lubricating oil, a high insulation property is required. In the conventional electric compressor as described above, usually, polyol ester-based oil, which is used generally for electric household appliances and the like, is used as the lubricating oil, and because this polyol ester-based oil has a relatively high insulation property as oil itself, no problem with respect to failure in insulation occurs.
Patent document 1: JP-A-2006-42409

### Disclosure of the Invention

### Problems to be solved by the Invention

However, because the above-described polyol ester-based oil is expensive, there is a requirement to want to change the lubricating oil to a cheaper one, in particular, to polyalkylene glycol-based oil. However, because the polyalkylene glycol-based oil is low in insulation performance as compared with the polyol ester-based oil, if the kind of the lubricating oil is changed as the conventional cluster terminal structure as shown in Fig. 5 is left as it is, anxiety with respect to insulation performance may remain. Further, in order to reduce the cost of the terminal device, although it is considered to use a cheaper steel member for its terminal member for connection, if it is changed to a steel member as the cluster terminal structure as shown in Fig. 5 is left as it is, anxiety with respect to electricity conduction performance may remain.

Accordingly, an object of the present invention is to provide a terminal device for an electric compressor which can exhibit a sufficiently high insulation performance even in case where polyalkylene glycol-based oil is used as lubricating oil contained in fluid to be compressed, which can easily employ a structure using no cluster while its high electricity conduction performance can be ensured, and which can be inexpensively constructed at a simple structure.

### Means for solving the Problems

To achieve the above-described object, a terminal device for an electric compressor according to the present invention has a partition wall which is located between a storing section for an electric motor for driving a compression mechanism, in which lubricating oil-containing fluid to be compressed is present, and a circuit section for supplying electricity to the electric motor, for isolating the both sections from each other, and a terminal member for supplying electricity to the electric motor which extends through the partition wall in a sealed and insulated manner, and is **characterized in that** the terminal member is constructed as a steel bolt-like member, and an end of a lead wire for supplying electricity to the electric motor is directly connected by caulking to an end of the terminal member at an electric motor-storing section side.

In such a terminal device for an electric compressor, the terminal member is constructed as a steel bolt-like member, and without employing a conventional cluster structure using a copper terminal member, the end of the lead wire for supplying electricity to the electric motor is directly connected by caulking to the inner end (an end at the electric motor-storing section side) of the steel bolt-like member. The terminal member forms an electricity conduction member, and even if this terminal member is made of steel, by properly setting the thickness and the diameter thereof and by properly setting the caulking and connection structure with the end of the lead wire, it becomes possible to realize an electricity conduction performance equal to that in case where a conventional copper terminal member is used. Further, because it is not necessary to use a cluster structure, it becomes possible to suppress occurrence of unnecessary gap portions into which lubricating oil-containing fluid to be compressed is liable to enter, thereby realizing a high insulation performance easily. Because a high insulation performance can be ensured, even if polyalkylene glycol-based oil is used as lubricating oil contained in fluid to be compressed, a necessary and sufficiently high insulation property can be maintained. Moreover, by constructing the terminal member as a steel bolt-like member and making a cluster unnecessary, great reduction in cost and simplification in structure of the terminal device may become possible.

In particular, by employing a structure wherein an insertion portion for an electricity conduction wire at the end of the lead wire for supplying electricity to the electric motor (this electricity conduction wire is a core wire of the lead wire, for example, an electricity conduction wire whose extended portion becomes a coil wire of a stator of the electric motor) and a caulking operation portion for caulking the electricity conduction wire inserted into the insertion portion are formed at the end of the terminal member at the electric motor-storing section side, even in case of a steel member, the caulking operation for the above-described direct connection may be carried out very easily, and a desired electric connection performance may be realized easily and more securely.

Further, in the terminal device for an electric compressor according to the present invention, a structure is preferably employed wherein an electricity conductive portion of the terminal member extending between the above-described both sections is covered with an insulating varnish, and by this, the insulation property of this portion may be also greatly improved by the simple structure where the predetermined electricity conductive portion of the terminal member is merely covered with the insulating varnish. As a result, even in case where polyalkylele glycol-based oil low in insulation performance is used as the lubricating oil contained in the fluid to be compressed, it becomes possible to exhibit a necessary and sufficiently high insulation performance more securely.

As the above-described insulating varnish, for example, an electro-deposition varnish can be used. By using an electro-deposition varnish, a layer for insulation may be easily formed at a uniform membrane thickness, and a desired insulation property can be easily obtained over a desirable range.

As the above-described lubricating oil contained in the fluid to be compressed, for example, it is preferred to use a cheap polyalkylene glycol-based oil such as one aforementioned. Although the insulation property of polyalkylene glycol-based oil itself is lower than that of polyol ester-based oil, by the structure of direct connection of the terminal member formed as a steel bolt-like member to the lead wire for electricity supply, and further by the above-described covering structure with the insulating varnish, it becomes possible to ensure a necessary electricity conduction performance while realizing a sufficiently high insulation performance.

In the terminal device for an electric compressor according to the present invention, the above-described partition wall is formed, for example, by a compressor housing. Further, it is also possible that the compressor housing is formed in an open-type structure, the opening portion of the compressor housing is tightly closed by a lid member, for example, by a lid member also functioning as a support member for the electricity supply circuit section, and a function of the above-described partition wall may be given to this lid member.

Further, although the terminal device for an electric compressor according to the present invention can be applied to any electric compressor requiring improvement of insulation performance and simplification of the structure for the terminal device portion, in particular, it is suitable for a compressor used in an air conditioning system for vehicles which is manufactured at a mass production style and which is required to be reduced in cost as a whole and for which reduction in cost of used lubricating oil is strongly required.

Where, the electric compressor in the present invention includes a so-called hybrid compressor which has a first compression mechanism driven only by an external drive source (for example, an engine for a vehicle or an electric motor for vehicle running) and a second compression mechanism driven only by a built-in electric motor in a single compressor and in which the first compression mechanism and the second compression mechanism are driven selectively or simultaneously, in addition to an electric compressor incorporating therein only an electric motor as a drive source for a compression mechanism. In case of the hybrid compressor, the present invention can be applied to a terminal device for the built-in electric motor.

### Effect according to the Invention

In the terminal device for an electric compressor according to the present invention, since the end of the lead wire for electricity supply to the electric motor is directly connected by caulking to the inner end of the terminal member constructed as a steel bolt-like member, it is not necessary to use a cluster structure using a conventional terminal member made of copper, it becomes possible to greatly reduce cost of the terminal device by greatly simplifying the structure of this portion, and by properly setting the structure of the terminal member constructed as the steel bolt-like member, high insulation performance and highly reliable electricity conduction performance can be ensured. Because a high insulation performance can be ensured, even in case where polyalkylene glycol-based oil low in insulation performance is used as the lubricating oil contained in the fluid to be compressed, a necessary and sufficiently high insulation performance can be maintained.

### Brief explanation of the drawings

[Fig. 1] Fig. 1 is vertical sectional view showing an example of an electric compressor applied with a terminal device for an electric compressor according to the present invention.
[Fig. 2] Fig. 2 is a schematic side view of a caulking connection portion of a terminal member used in the terminal device for an electric compressor depicted in Fig. 1 with a lead wire for electricity supply.
[Fig. 3] Fig. 3 is a schematic cross-sectional view of the terminal member portion depicted in Fig. 2.
[Fig. 4] Fig. 4 is a schematic side view of a terminal member depicted in Fig. 2 showing an example being provided with an insulating varnish.
[Fig. 5] Fig. 5 is a schematic diagram of a conventional terminal device.

### Explanation of symbols

- 1:: electric compressor
- 2:: fixed scroll
- 3:: movable scroll
- 4:: compression mechanism
- 8:: compressor housing
- 9:: electric motor
- 10:: rotational shaft
- 11:: stator
- 12:: rotor
- 13:: electric motor storing section
- 14:: side wall of compressor housing as partition wall
- 15:: terminal device
- 16:: circuit section for electricity supply
- 17:: terminal member for electricity supply
- 18:: lead wire for electricity supply
- 19:: insulation cover tube
- 20:: coil wire for stator
- 21:: insertion portion
- 22:: caulking operation portion
- 23:: insulating varnish

### The Best mode for carrying out the Invention

Hereinafter, desirable embodiments of the present invention will be explained referring to the drawings.

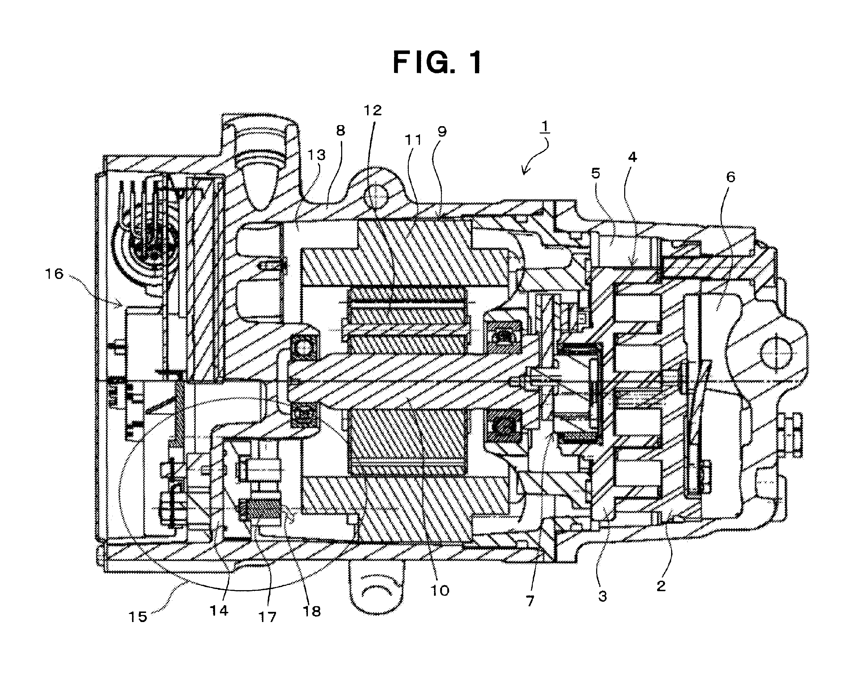

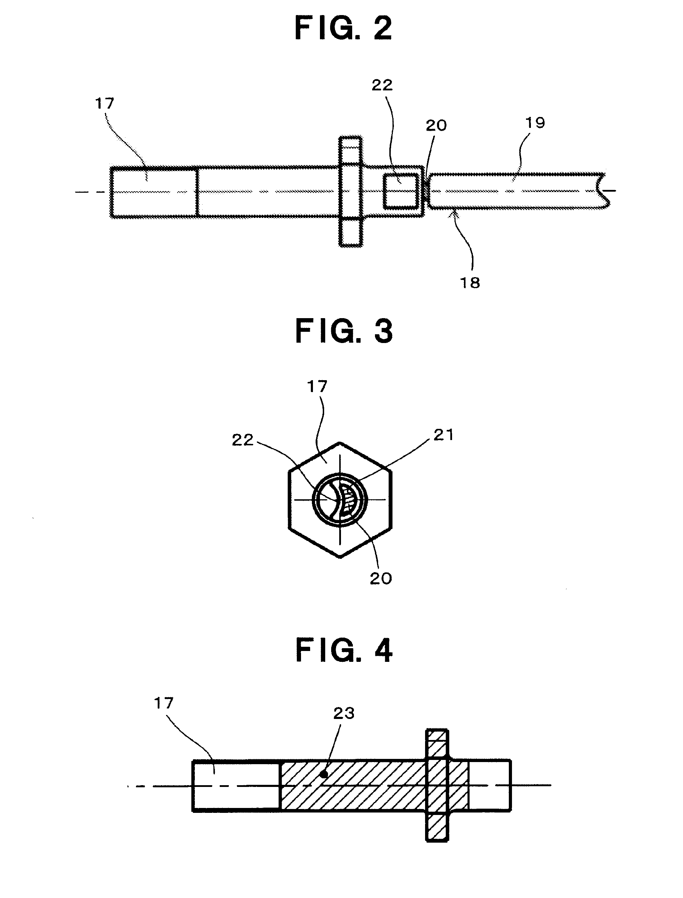

Fig. 1 depicts an example of an electric compressor applied with the present invention, Figs. 2-4 show examples of the portions of terminal members of a terminal device in case where the present invention is applied to the electric compressor. In Fig. 1, symbol 1 indicates the whole of the electric compressor, electric compressor 1 has a scroll type compression mechanism 4 comprising a fixed scroll 2 and a movable scroll 3, and a fluid to be compressed (for example, refrigerant R134a) sucked from a suction chamber 5 is compressed in compression mechanism 4, and thereafter, it is discharged into a discharge chamber 6. Movable scroll 3 is driven by a rotational shaft 10 of an electric motor 9 built in a compressor housing 8 so as to achieve an orbital movement relative to fixed scroll 2 via a crank mechanism 7. Electric motor 9 comprises a stator 11 and rotor 12, and rotational shaft 10 is rotated integrally with rotor 12. The fluid to be compressed contains lubricating oil which is polyalkylene glycol-based oil, and this lubricating oil-containing fluid to be compressed is passed also through a storing section 13 for the built-in electric motor 9.

A terminal device 15 is provided on a side wall 14 of compressor housing 8, and a predetermined electricity is supplied to electric motor 9 through terminal device 15 from a circuit section for electricity supply 16 connected to an external power source (not shown). This electricity supply is performed through a terminal member for electricity supply 17 to electric motor 9, which extends through a partition wall (in this embodiment, side wall 14 of compressor housing 8) that is located between storing section 13 for electric motor 9 for driving the compression mechanism present with the lubricating oil-containing fluid to be compressed and circuit section for electricity supply 16 to electric motor 9 and that isolates the both sections, and a lead wire for electricity supply 18 for electric motor 9 connected to the inner end of terminal member 17 (the electric motor storing section-side end). The core wire of lead wire for power supply 18 extends toward stator 11 so as to form the coil of stator 11 of motor 9.

The portion of the above-described terminal member 17 is structured as depicted in Figs. 2-4. As depicted in Figs. 2 and 3, the above-described terminal member 17 is formed as a bolt-like member capable of being fixed at the side of electricity supply circuit section 16, and in particular, constructed as a steel member. To the inner end of this terminal member 17 (the electric motor storing section-side end), the end of lead wire for electricity supply 18, in particular, the end of coil wire 20 for stator 11 of electric motor 9, which is the core wire (electricity conduction wire) of lead wire for electricity supply 18 covered with insulation cover tube 19, is connected by caulking. An insertion portion 21 for the end of exposed coil wire 20 is formed on the inner end of terminal member 1 7 as a half moon-like shape in section in this embodiment, and on the insertion portion 21, a caulking operation portion 22 is formed for caulking the end of coil wire 20 inserted into the insertion portion 21 by adding a force from outside. By this the structure for caulking the end, even in case of steel terminal member 17, the caulking operation can be carried out very easily, and a desired electric connection performance (electricity conduction performance) can be easily realized by achieving the direct connection of the end of coil wire 20 to the inner end of terminal member 17.

However, because the electricity conduction property of steel terminal member 17 itself is poor as compared with that of a copper member, by properly setting the thickness of terminal member 17 and constructing the structure of the caulking portion as a structure capable of exhibiting a high press-contact force, a desired electricity conduction performance equal to that in case using a copper terminal member can be ensured.

Further, in this embodiment, as depicted in Fig. 4, the electricity conduction portion of terminal member 17 extending between the both sections of electric motor storing section 13 and circuit section for electricity supply 16 is covered with insulating varnish 23 comprising an electro-deposition varnish, and the outer surface of terminal member 17 in this zone is completely insulated from the circumferences. Therefore, particularly, in the inner end-side portion of and its vicinity of terminal member 17 can be ensured at a necessary and sufficiently high insulation performance, even if it comes into contact with the lubricating oil contained in the fluid to be compressed.

In the terminal device for an electric compressor constructed as described above, by the structure wherein the end of lead wire for electricity supply 18 to electric motor 9 is directly connected by caulking to the inner end of terminal member 17 constructed as a steel bolt-like member, it is becomes unnecessary to use a cluster structure using a conventional terminal member made of copper, simplification of the structure of this portion and reduction in cost of the terminal device become possible, and by properly setting the structure of terminal member 17 constructed as the steel bolt-like member, high insulation performance and highly reliable electricity conduction performance can be ensured. By this high insulation performance, even in case where polyalkylene glycol-based oil low in insulation performance is used as the lubricating oil contained in the fluid to be compressed, a necessary and sufficiently high insulation performance can be maintained.

### Industrial Applications of the Invention

The terminal device for an electric compressor according to the present invention can be applied to any electric compressor incorporating therein an electric motor, and in particular, it is suitable for a compressor used in an air conditioning system for vehicles which is manufactured at a mass production style and which is required to be reduced in cost as the whole of the compressor and for which reduction in cost of used lubricant is required.

## Claims

1. A terminal device for an electric compressor having a partition wall which is located between a storing section for an electric motor for driving a compression mechanism, in which lubricating oil-containing fluid to be compressed is present, and a circuit section for supplying electricity to said electric motor, for isolating said both sections from each other, and a terminal member for supplying electricity to said electric motor which extends through said partition wall in a sealed and insulated manner, **characterized in that** said terminal member is constructed as a steel bolt-like member, and an end of a lead wire for supplying electricity to said electric motor is directly connected by caulking to an end of said terminal member at an electric motor-storing section side.

2. The terminal device for an electric compressor according to claim 1, wherein an insertion portion for an electricity conduction wire at said end of said lead wire for supplying electricity to said electric motor and a caulking operation portion for caulking said electricity conduction wire inserted into said insertion portion are formed at said end of said terminal member at said electric motor-storing section side.

3. The terminal device for an electric compressor according to claim 1, wherein an electricity conductive portion of said terminal member extending between said both sections is covered with an insulating varnish.

4. The terminal device for an electric compressor according to claim 3, wherein said insulating varnish is an electro-deposition varnish.

5. The terminal device for an electric compressor according to claim 1, wherein a polyalkylene glycol-based oil is used as said lubricating oil.

6. The terminal device for an electric compressor according to claim 1, wherein said partition wall is formed by a compressor housing.

7. The terminal device for an electric compressor according to claim 1, wherein said electric compressor is a compressor used in an air conditioning system for vehicles.
